# EUROPÄISCHE PATENTSCHRIFT

(11) **EP 3 121 107 B1**
(45) Veröffentlichungstag und Bekanntmachung des Hinweises auf die Patenterteilung: **23.06.2021**
(21) Anmeldenummer: 16001308.2
(22) Anmeldetag: 27.05.2014
(51) Int. Cl.: B62M 9/10, F16H 55/30

(54) **KETTENRING**
CHAIN RING
ANNEAU POUR FIL DE CHAINE

(30) Priorität: 05.06.2013 DE 102013009492
(43) Veröffentlichungstag der Anmeldung: 25.01.2017
(62) Teilanmeldung aus: 14001836.7
(73) Patentinhaber: SRAM Deutschland GmbH, 97424 Schweinfurt (DE)
(72) Erfinder: Reiter, Markus, 97422 Schweinfurt (DE); Hanke, Joachim, 04317 Leipzig (DE)
(74) Vertreter: Thum, Bernhard

(56) Entgegenhaltungen:
- EP-A1- 1 764 296
- DE-U1-202012 012 533
- None

## Beschreibung

Die vorliegende Erfindung betrifft Kettenräder bzw. Kettenringe, und insbesondere Einzelkettenringe zur Verwendung mit einer bekannten Kette in einem Fahrradantriebstrangsystem, das eine Fahrradkurbel umfasst. Fahrräder und andere kettenangetriebene Fahrzeuge verwenden in der Regel einen oder mehrere Kettenringe und einen Satz von an einer hinteren Narbe angebrachten Ritzeln, die mit dem Kettenring über eine Kette verbunden sind. Es werden verschiedene Mechanismen zum Halten der Kette an dem Kettenring und den Ritzeln verwendet. Diese Mechanismen umfassen Kettensicherungen, Kettenspanner, Kettenfänger, Schaltwerkanordnungen und dergleichen.

Während des Fahrens eines Fahrrads mit einem kettengetriebenen Antriebsstrang ist die Handhabung der Kette und der Kettenringeingriff für einen sicheren und effektiven Antrieb des Fahrrads besonders wichtig. Die Kette mit dem Kettenring in Eingriff zu halten, kann schwierig sein. Insbesondere bei Fahrrädern mit Gangschaltungen können erhebliche Veränderungen in der Kettenspannung und dynamische Bewegungen der Kette auftreten, vor allem während des Fahrens im Gelände.

Darüber hinaus kann der Kettenring bei jedem Fahrrad die Kettenstrebe des Fahrradrahmens berühren, wenn sich die Kurbel in einer Position befindet, in der hohe Lasten von dem Fahrer ausgeübt werden, was eine elastische Deformation des Fahrradrahmens und der Kurbelanordnung verursacht. Dies kann zu Schäden an dem Rahmen und an dem Kettenring führen und andere Probleme verursachen.

Aus dem Stand der Technik ist eine Vielzahl von Kettenrädern, Kettenringen aber auch Ritzeln bekannt, bei denen die Zähne lokal deformiert sind, um Steighilfen für die Kette zu ermöglichen oder um die Kettenführungseigenschaften zu verbessern.

Beispielsweise wird auf das Dokument WO 98/06962 A1 verwiesen, bei dem die Zähne zickzackartig oder wellenartig entlang der Umfangsrichtung versetzt sind, um ein Rattern der Kette zu vermeiden. Eine ähnliche Lösung ist aus dem Dokument FR 2 545 902 A1 und aus dem Dokument DE 28 16 137 A1 bekannt.

Das Dokument EP 0 934 871 B1 zeigt eine Ritzelanordnung, bei der einzelne Ritzel materialabtragend bearbeitet wurden, um Schmutzablagerungen zu vermeiden und um Steighilfen für die Kette bei Schaltvorgängen zu ermöglichen.

Das Dokument US 3,745,851 zeigt ein Kettenrad, bei dem die Zähne durch Deformationen im Bereich der Zahnflanken verbreitert sind.

Das Dokument US 3,654,814 zeigt eine Lösung, bei der auf beiden Seiten der Zähne jeweils ovale wulstartige Vorsprünge vorgesehen sind.

Schließlich zeigt das Dokument US 4,867,733 ein Kettenrad in Sandwichbauweise, das in seinem zentralen Bereich aus einem elastischen Körper hergestellt ist, der jeweils seitlich von die einzelnen Zähne bildenden Metallscheiben umgeben ist. Zusätzlich sind bei Bedarf noch seitliche Pufferelemente vorgesehen.

DE 20 2012 012 533 U1 offenbart einen Kettenring, der Zähne an seinem Umfang aufweist, entsprechend der Präambel des Anspruchs 1. Die Zähne umfassen eine erste Zahngruppe und eine zweite Zahngruppe, die in alternierender Weise angeordnet sind. Jeder Zahn der ersten Zahngruppen an seiner Außenseite hat einen ersten Vorsprung.

Der vorstehend beschriebene Stand der Technik hat einerseits Nachteile, insbesondere weil die Fertigung aufwändig und damit kostenintensiv ist, und unterliegt darüber hinaus dem Problem, dass sich nicht zuverlässig und dauerhaft die gewünschten Kettenführungseigenschaften einstellen.

Die Erfindung setzt sich zur Aufgabe, einen Kettenring bereitzustellen, der eine verbesserte Antriebskettenhandhabung ermöglicht, insbesondere für Fahrräder, die erfolgreich und zuverlässig im groben und anspruchsvollen Gelände gefahren werden, wobei die Herstellung des erfindungsgemäßen Kettenrings einfach und kostengünstig bei hoher Funktionalität und Lebensdauer des Kettenrings erfolgt.

### Abriss der Erfindung

Diese Aufgabe wird durch einen Kettenring mit den Merkmalen des Patentanspruchs 1 gelöst.

Weiterbildungen der Erfindung finden sich in den abhängigen Ansprüchen und in der nachfolgenden Beschreibung wieder.

Die vorliegende Erfindung stellt gemäß einer Ausführungsform einen Einzelkettenring für eine Fahrradvorderkurbelanordnung zum Eingreifen in eine Antriebskette bereit. Der Einzelkettenring, wobei "Einzel" nur einen einzigen bedeutet, umfasst eine um den Umfang des Kettenrings ausgebildete Vielzahl von Zähnen, wobei die Vielzahl der Zähne eine gerade Anzahl an Zähnen aufweist. Die Vielzahl der Zähne umfasst eine erste Zahngruppe und eine zweite Zahngruppe, die alternierend zwischen der ersten Zahngruppe angeordnet ist. Die Anzahl der ersten Zahngruppe und der zweiten Zahngruppe ist gleich. Jede erste und zweite Zahngruppe umfasst eine Außenseite und eine Innenseite, die der Außenseite entgegengesetzt ist. Jeder Zahn der ersten Zahngruppe umfasst wenigstens einen ersten Vorsprung an der Außenseite, und jeder Zahn der zweiten Zahngruppe ist ohne einen Vorsprung ausgebildet. Erfindungsgemäß ist ferner vorgesehen, dass der erste Vorsprung von einer Materialverformung an der Außenseite gebildet ist, die von der Innenseite oder von der Außenseite ausgehend erreicht wird.

Gemäß der Erfindung wird der Kettenring einfach durch lokale Materialumformung derart bearbeitet, dass sich die gewünschten Vorsprünge an der ersten Zahngruppe ausbilden. Umfangreiche Umformbearbeitungsvorgänge, die sich etwa über den gesamten Umfang des Kettenrings ergeben, sind nicht erforderlich. Dadurch lässt sich die Grundstruktur des Kettenrings erhalten und nur dort an dieser durch Umformbearbeitung eingreifen, wo auch tatsächlich zum Erreichen verbesserter Kettenführungseigenschaften Eingriffe erforderlich sind, nämlich an den Zähnen der ersten Zahngruppe.

Die Erfindung bietet den Vorteil eines relativ geringen Bearbeitungsaufwands mit dem Ergebnis deutlich verbesserter Kettenführungseigenschaften gegenüber dem Stand der Technik.

Die Erfindung kann ferner einen Einzelkettenring der vorstehend beschriebenen Art für eine Fahrradvorderkurbelanordnung für den Eingriff in eine Antriebskette bereitstellen, wobei die Antriebskette überlappend angeordnete innere und äußere Verbindungselemente umfasst, wobei der Kettenring eine um einen Umfang des Kettenrings ausgebildete Vielzahl von Zähnen aufweist, und die Vielzahl an Zähnen eine gerade Anzahl an Zähnen aufweist. Die Vielzahl der Zähne umfasst eine erste Zahngruppe und eine zweite Zahngruppe, die alternierend zwischen der ersten Zahngruppe angeordnet ist. Die erste Zahngruppe und die zweite Zahngruppe sind von der Anzahl her gleich. Jede erste Zahngruppe und zweite Zahngruppe umfasst eine Außenseite und eine Innenseite, die der Außenseite entgegengesetzt ist. Jede Außenseite und jede Innenseite jeder zweiten Zahngruppe definiert eine in dem Kettenring entlang der zweiten Zahngruppe ausgebildete Ausnehmung.

Die Erfindung betrifft ferner eine Fahrradkurbelanordnung, die einen Fahrradkurbelarm und einen Einzelkettenring der vorstehend beschriebenen Art umfasst, der an dem Fahrradkurbelarm angebracht und mit einer Antriebskette in Eingriff bringbar ist. Der Einzelkettenring umfasst eine um einen Umfang des Kettenrings ausgebildete Vielzahl von Zähnen, wobei die Vielzahl von Zähnen eine gerade Anzahl an Zähnen aufweist. Die Vielzahl der Zähne umfasst eine erste Zahngruppe und eine zweite Zahngruppe, die alternierend zwischen der ersten Zahngruppe angeordnet ist. Die erste Zahngruppe und die zweite Zahngruppe sind von ihrer Anzahl her gleich. Jede erste und zweite Zahngruppe umfasst eine Außenseite und eine Innenseite, die der Außenseite entgegengesetzt ist. Jeder Zahn der ersten Zahngruppe umfasst wenigstens einen Vorsprung an der Außenseite und jeder Zahn der zweiten Zahngruppe ist ohne einen ersten Vorsprung an der Außenseite und der Innenseite ausgebildet.

Der voranstehend beschriebene Kettenring kann gemäß einer Ausführungsform einen zweiten Vorsprung an der Innenseite der ersten Zahngruppe aufweisen. Dabei kann vorgesehen sein, dass der zweite Vorsprung von einer Materialverformung an der Außenseite gebildet ist, die von der Innenseite oder von der Außenseite ausgehend hergestellt ist.

Bei dem Kettenring der voranstehend beschriebenen Art kann gemäß einer Ausführungsform der vorliegenden Erfindung ferner vorgesehen sein, dass der erste Vorsprung eine erste Breite und der zweite Vorsprung eine zweite Breite hat, wobei die erste Breite gleich der zweiten Breite ist. Alternativ kann gemäß einer Weiterbildung der Erfindung die erste Breite größer als die zweite Breite sein oder umgekehrt.

Es kann vorgesehen sein, dass der erste oder/und der zweite Vorsprung durch Einprägen hergestellt ist, wobei Material des Zahns von der einen Seite eingeprägt und zum Ausbilden des Vorsprungs auf der anderen Seite des Zahns aus dem Zahn in der gewünschten Form "herausgedrückt" ist. Dies geschieht dadurch, dass etwa ein Umformwerkzeug auf der einen Seite des Zahns angesetzt wird und den Zahn lokal deformiert, so dass am Zahn eine Ausnehmung, Einprägung oder Vertiefung entsteht. Dadurch wird erreicht, dass Material in gewünschter Weise auf die andere Seite des Zahns zum Erzielen des Vorsprungs fließt.

Eine Weiterbildung der Erfindung sieht vor, dass der zweite Vorsprung durch Materialumformung oberhalb der Einprägung für den erste Vorsprung vorgesehen ist.

Alternativ zu der vorstehend beschriebenen Fertigungsmöglichkeit des Einprägens und "Durchdrückens" von Zahnmaterial von der einen Zahnseite zur anderen sieht eine Weiterbildung der Erfindung vor, dass der erste oder/und der zweite Vorsprung durch Einprägen hergestellt ist, wobei Material des Zahns an der einen Seite des Zahns lokal eingeprägt wird, so dass zum Ausbilden des wenigstens einen Vorsprungs Material auf derselben Seite des Zahns nahe der lokalen Einprägung hervortritt. Hier wird also das Material nicht sozusagen durch den Zahn hindurch gedrückt, sondern lokal deformiert, so dass es seitlich der Deformation auf derselben Seite des Zahns zum Ausbilden des Vorsprungs hervortritt.

Eine Weiterbildung der Erfindung sieht vor, dass zum Ausbilden zweier Vorsprünge auf ein und derselben Seite des Zahns Material beidseits der lokalen Einprägung hervortritt. Mit anderen Worten wird der Zahn lokal derart durch Einprägen deformiert, dass das Material beim Umformen in einen Bereich beidseits der Einprägung verdrängt wird und sich dort zum Ausbilden der beiden Vorsprünge auf derselben Seite des Zahns auswölbt. Dabei ist es möglich, dass sich zwei im Wesentlichen lineare Vorsprünge entlang der Einprägung ergeben, wenn Letztere länglich ausgebildet ist. Eine Weiterbildung der Erfindung sieht vor, dass sich das hervortretende, wenigstens einen Vorsprung bildende Material zumindest abschnittsweise um die lokale Einprägung herum erstreckt. So lassen sich auch komplexere Vorsprungsstrukturen erzielen.

Hinsichtlich der Dimensionen kann im tiefsten Bereich der Einprägung bzw. der einander gegenüberliegenden Einprägung auf der Außenseite und der Innenseite des jeweiligen Zahns die Dicke des Zahns auf bis zu 30 % seiner ursprünglichen Dicke reduziert sein. Im Bereich des wenigstens einen Vorsprungs kann die Dicke des Zahns um 30 - 50 % vergrößert sein.

Die Einprägung kann sich auf einen lokalen Bereich beschränken oder kann in einer radialen Länge ausgeführt sein, die sich über 30 % bis zu 100 % der radialen Höhe des Zahns erstreckt. Die Vorsprünge sind vorzugsweise gerundet ausgebildet und es werden scharfe Kanten vermieden. Gleiches gilt für die Ausgestaltung der Einprägungen.

Bei dem voranstehend beschriebenen Kettenring kann gemäß einer Weiterbildung der Erfindung ferner vorgesehen sein, dass jeder Zahn der ersten Zahngruppe und der zweiten Zahngruppe eine vordere Flanke umfasst, wobei die vordere Flanke einen vorstehenden Spitzenabschnitt umfasst, der zum Führen der Kette ausgebildet ist.

Bei dem voranstehend beschriebenen Kettenring kann gemäß einer Ausführungsform der Erfindung ferner vorgesehen sein, dass jeder Zahn der ersten Zahngruppe und der zweiten Zahngruppe eine hintere Flanke umfasst, wobei die hintere Flanke einen Hakenabschnitt umfasst, der zum Führen der Kette ausgebildet ist.

Bei dem Kettenring der voranstehend beschriebenen Art kann gemäß einer Weiterbildung der Erfindung ferner vorgesehen sein, dass jeder Zahn der ersten Zahngruppe und der zweiten Zahngruppe eine vordere Flanke und eine hintere Flanke umfasst, wobei die vordere Flanke von jedem Zahn einen vorstehenden Spitzenabschnitt umfasst.

Bei dem voranstehend beschriebenen Kettenring kann gemäß einer Weiterbildung der Erfindung ferner vorgesehen sein, dass die hintere Flanke jedes Zahns einen Hakenabschnitt umfasst.

Bei dem voranstehend beschriebenen Kettenring kann gemäß einer Ausführungsform der Erfindung der Hakenabschnitt einen im Wesentlichen radial orientierten Abschnitt umfassen.

Bei dem voranstehend beschriebenen Kettenring kann gemäß einer Weiterbildung der Erfindung vorgesehen sein, dass der vorstehende Spitzenabschnitt und ein Hakenabschnitt eines benachbarten Zahns zum Führen der Kette zusammenwirken.

Bei dem Kettenring der voranstehend beschriebenen Art kann gemäß einer Weiterbildung der Erfindung ferner vorgesehen sein, dass jeder Zahn der ersten Zahngruppe eine radial äußere Fase umfasst, die eine erste Erstreckung entlang der Außenseite jedes Zahnes aufweist.

Bei dem Kettenring der voranstehend beschriebenen Art kann gemäß einer Weiterbildung der Erfindung ferner vorgesehen sein, dass jeder Zahn der zweiten Zahngruppe eine radial äußere Fase umfasst, die eine zweite Erstreckung entlang der Außenseite jedes Zahnes hat.

Bei dem Kettenring der voranstehend beschriebenen Art kann gemäß einer Weiterbildung der Erfindung ferner vorgesehen sein, dass jeder Zahn der ersten Zahngruppe eine äußere Fase mit einer ersten Erstreckung umfasst, und jeder Zahn der zweiten Zahngruppe eine äußere Fase mit einer zweiten Umstreckung umfasst, und die erste Erstreckung kleiner als die zweite Erstreckung ist.

Die Erfindung betrifft ferner einen Einzelkettenring für eine Fahrradvorderkurbelanordnung zum Eingreifen in eine Antriebskette, wobei die Antriebskette überlappend angeordnete innere und äußere Verbindungselemente umfasst, wobei der Kettenring in der vorstehend beschriebenen Art ausgebildet ist.

Die vorliegende Erfindung betrifft ferner eine Fahrradkurbelanordnung, aufweisend: einen Fahrradkurbelarm; und
einen Einzelkettenring der vorstehend beschriebenen Art, der an dem Fahrradkurbelarm angebracht ist, und mit einer Antriebskette in Eingriff bringbar ist.

Diese und andere Merkmale und Vorteile der vorliegenden Erfindung werden von der nachstehenden Beschreibung einer oder mehrerer Ausführungsformen der vorliegenden Erfindung mit Bezug auf die beigefügten Figuren ersichtlich.

### Kurzbeschreibung der Erfindung

Es stellen dar:
- Fig. 1: eine Draufsicht einer herkömmlichen Antriebskette;
- Fig. 2: eine Seitenansicht der herkömmlichen Antriebskette gemäß Fig. 1;
- Fig. 3: eine isometrische Ansicht einer Kombination der Antriebskette und eines Kettenrings zur einführenden Erläuterung der Erfindung, die miteinander in einem Antriebsstrang in Eingriff stehen;
- Fig. 4: eine Seitenansicht des Kettenrings aus Figur 3;
- Fig. 5: eine vergrößerte Ansicht des Kettenrings gemäß Fig. 4;
- Fig. 6: eine Seitenansicht einer Kombination einer Antriebskette und eines Kettenrings gemäß zur Erläuterung der vorliegenden Erfindung, die mit einer Antriebskette mit entfernten äußeren Verbindungsplatten in Eingriff steht;
- Fig. 7: eine isometrische Vorderansicht des Kettenrings aus Fig. 6;
- Fig. 8: eine isometrische Vorderansicht des Kettenrings gemäß Fig. 7, im Eingriff mit einer Antriebskette;
- Fig. 9: eine isometrische Rückansicht des Kettenrings gemäß Fig. 7, im Eingriff mit einer Antriebskette;
- Fig. 10: eine Vorderansicht des Kettenrings aus Fig. 9;
- Fig. 11: eine Vorderansicht des Kettenrings aus Fig. 10 im Eingriff mit einer Antriebskette;
- Fig. 12: eine Querschnittsansicht entlang der Schnittlinie B-B gemäß Fig. 5 eines Typs eines Zahnradzahns gemäß einer Zahngruppe;
- Fig. 13-15: Querschnittsansichten entlang der Schnittlinie A-A gemäß Fig. 5 von alternativen Varianten eines Zahnradzahns, die sich von dem Zahn gemäß Fig. 12 unterscheiden und gemäß einer anderen Zahngruppe ausgebildet sind;
- Fig. 16: eine teilweise Seitenansicht des Kettenrings zur Erläuterung der Erfindung mit den Rollen einer Kette im Eingriff mit den Zähnen des Kettenrings;
- Fig. 17: eine perspektivische Ansicht einer ersten Ausführungsform eines erfindungsgemäßen Kettenrings;
- Fig. 18: eine weitere perspektivische Ansicht der ersten Ausführungsform des erfindungsgemäßen Kettenrings;
- Fig. 19: eine weitere perspektivische Ansicht der ersten Ausführungsform des erfindungsgemäßen Kettenrings;
- Fig. 20: eine perspektivische Ansicht einer zweiten Ausführungsform des erfindungsgemäßen Kettenrings;
- Fig. 21: eine perspektivische Ansicht eines Zahns einer dritten Ausführungsform des erfindungsgemäßen Kettenrings;
- Fig. 22: eine Schnittansicht durch den Zahn aus Figur 21 entlang der Schnittlinie I-I;
- Fig. 23: eine Draufsicht auf den Zahn aus Figur 21;
- Fig. 24: eine Schnittansicht durch den Zahn aus Figur 21 entlang der Schnittlinie II-II;
- Fig. 25: eine Schnittansicht durch den Zahn aus Figur 21 entlang der Schnittlinie III-III;
- Fig. 26: eine perspektivische Ansicht eines Zahns einer beispielhaften Ausführungsform des Kettenrings, und
- Fig. 27: eine perspektivische Querschnittsansicht durch einen Zahn entlang der Schnittlinie IV aus Figur 26.

### Detaillierte Beschreibung der bevorzugten Ausführungsformen

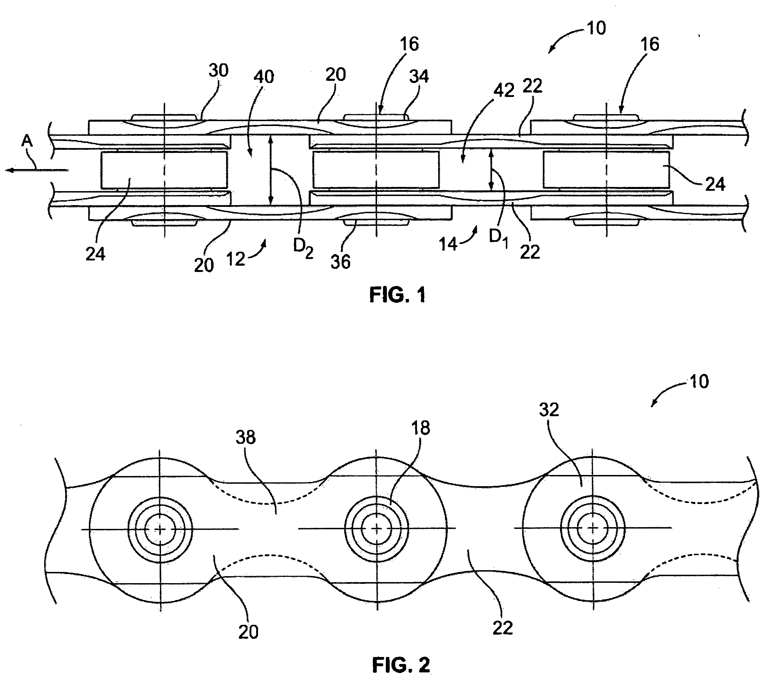

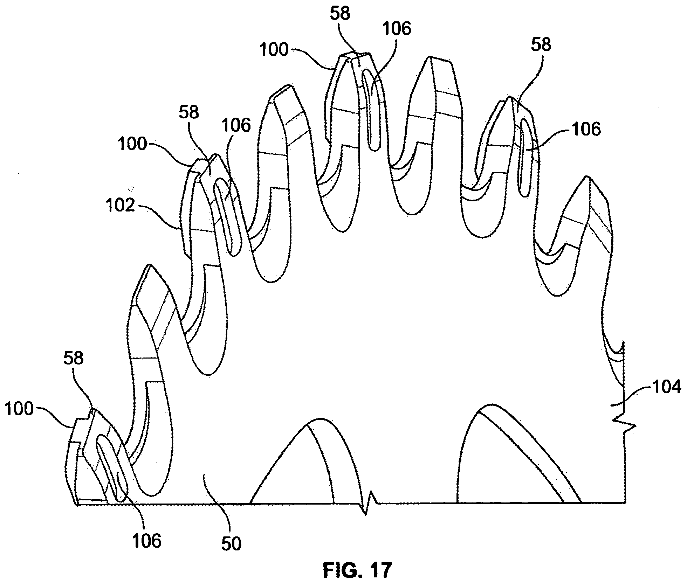

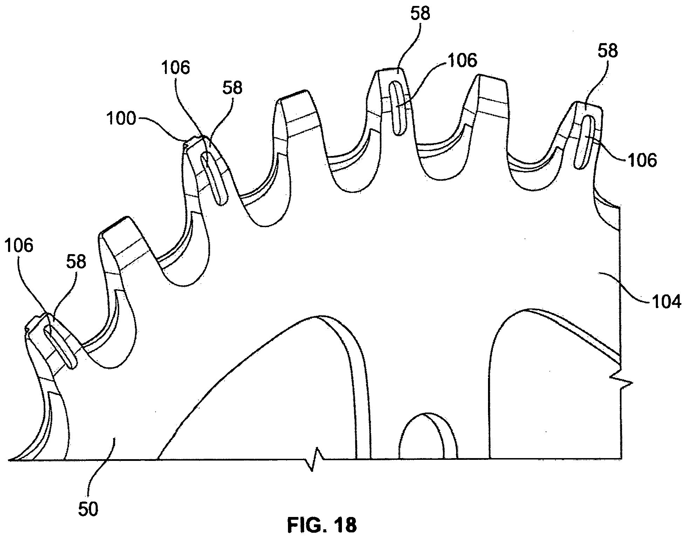

Die bevorzugten Ausführungsformen der Erfindung werden nachstehend mit Bezug auf die Figuren beschrieben. Dabei dienen die Figuren 1 bis 16 zunächst der Erläuterung des Hintergrunds der Erfindung. Die eigentlichen Ausführungsformen der Erfindung werden mit Bezug auf die Figuren 17-27 beschrieben. Es ist allgemein verständlich, dass die Figuren und die nachstehende Beschreibung nur zur Veranschaulichung dienen sollen und die in den beigefügten Ansprüchen definierte Erfindung und alle ihre Äquivalente nicht einschränken. Beispielsweise werden die Begriffe "erste" und "zweite" oder "links" und "rechts" nur zum Zwecke der Klarheit verwendet und nicht als beschränkende Begriffe.

Mit Bezug auf die Figuren 1 und 2 kennzeichnet das Bezugszeichen 10 im Wesentlichen eine herkömmliche Rollenantriebskette für ein Fahrrad oder eine ähnliche kettenangetriebene Vorrichtung. Die Antriebskette 10 umfasst im Wesentlichen äußere Kettenverbindungselemente 12 und innere Kettenverbindungselemente 14, die über Bolzen 16, 18 schwenkbar an den äußeren Kettenverbindungselementen angebracht und mit diesen verbunden sind. Die äußeren Kettenverbindungselemente 12 sind alternierend und überlappend mit den inneren Kettenverbindungselementen 14 angeordnet.

Die äußeren Kettenverbindungselemente 12 umfassen paarweise äußere Verbindungsplatten 20 und die inneren Kettenverbindungselemente umfassen paarweise innere Verbindungsplatten 22. Typischerweise sind Rollen 24 um die Bolzen 16, 18 herum angeordnet. Die Platten 20, 22 sind mit Öffnungen 30 an ihren Enden 32 versehen. Die Bolzen 16 und 18 erstrecken sich durch und stehen aus den Öffnungen 30 vor, obwohl nicht vorstehende Bolzen im Allgemeinen als optimal angesehen werden. Die Bolzen 16 und 18 werden an ihren Enden 34, 36 während des Zusammensetzens der Rollenkette 10 vernietet. Während der Bolzen 16 aus einem Rundstab hergestellt ist, kann der Bolzen 18 auch aus einem rohrförmigen Stab hergestellt sein, wie bei der in Fig. 2 gezeigten Rollenkette 10. Ein verkleinerter mittlerer Abschnitt 38, der das Festlegen der Position der Rollenkette 10 unterstützt, erstreckt sich zwischen den beiden kreisförmigen Enden 32 jeder der äußeren Verbindungsplatten 20 und der inneren Verbindungsplatten 22.

Wie am deutlichsten in Fig. 1 erkennbar ist, bilden von oben (oder unten) der Kette betrachtet die überlappend angeordneten äußeren Verbindungselemente 12 und inneren Verbindungselemente 14 korrespondierende und alternierende äußere Verbindungsräume 40 und innere Verbindungsräume 42. Die äußeren Verbindungsräume 40 sind Öffnungen, die durch die äußeren Verbindungsplatten 20 und die Rollen 24 festgelegt sind. Die inneren Verbindungsräume 42 sind Öffnungen, die durch die inneren Verbindungsplatten 22 und die Rollen 24 festgelegt sind.

Die inneren Verbindungsräume 42 sind im Wesentlichen rechteckig ausgebildet, wobei die Längsachse des Rechtecks mit der Längsachse A der Kette 10 (in der Blickrichtung gemäß Fig. 1) übereinstimmt. Die axiale Länge der inneren Verbindungsräume 40 wird von dem Abstand zwischen den Rollen 24 festgelegt, während der Abstand zwischen den inneren Verbindungsplatten 22 die Quererstreckung der inneren Verbindungsräume bestimmt.

Wie in Fig. 1 dargestellt ist, haben die äußeren Verbindungsräume 40 im Wesentlichen die Form eines "Kreuzes" oder in anderen Worten eines "Plus". Die axiale Länge der äußeren Verbindungsräume 40 wird durch den Abstand zwischen den Rollen 24 festgelegt, während der Abstand zwischen den äußeren Verbindungsplatten 20 die Quererstreckung der äußeren Verbindungsräume bestimmt.

Wie erkennbar ist, ist der Querabstand zwischen den äußeren Verbindungsplatten 20 größer als der Abstand zwischen den inneren Verbindungsplatten 22. Da die Quererstreckung der Rollen 24 den Abstand der inneren Platten 22 bestimmt, legen die Rollen den Querabstand D1 der inneren Verbindungsplatten 42 fest. Da in ähnlicher Weise die äußeren Platten 20 an den Bolzen 16 (oder 18) an den Außenseiten der inneren Verbindungsplatten 22 positioniert sind, wird der Querabstand D2 der äußeren Verbindungsplatten 40 von der Summe der Quererstreckung der Rollen 24 und der Dicke der beiden inneren Verbindungsplatten festgelegt.

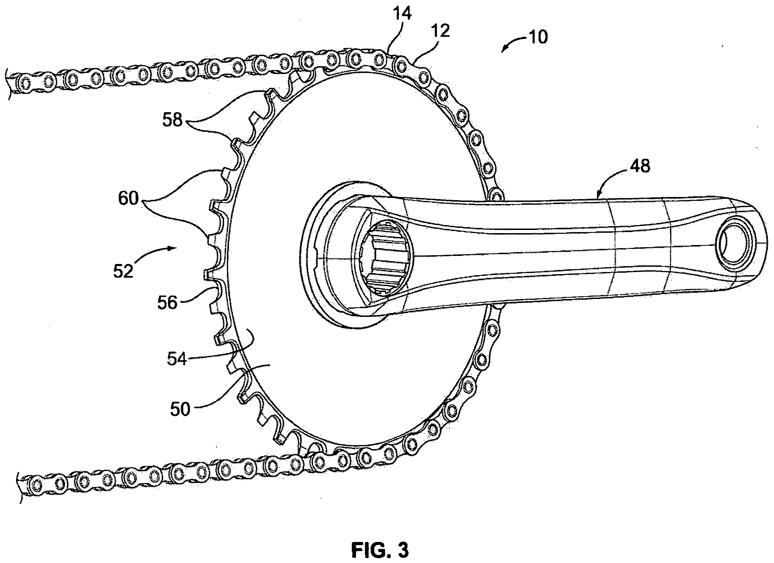

In Fig. 3 wird ein zur Erläuterung des Erfindungshintergrunds gezeigter Kettenring bzw. Kettenrad 50 mit einer bekannten Kette 10 verwendet. Kettenringe haben typischerweise eine hohe Anzahl an Zähnen, verglichen mit Ritzelkassetten, beispielsweise 20 oder mehr Zähne. Eine Kurbel oder ein Kurbelarm 48 ist an einer typischen Position und an dem Kettenring 50 in bekannter Weise angebracht. Die Kurbelseite des Kettenrings 50 ist in Fig. 3 gezeigt, wobei die Kurbelseite die Außenseite 54 des Kettenrings ist. Die Außenseite zeigt von dem Fahrzeug weg, an dem der Kettenring angebracht ist. Die entgegengesetzte Seite der Außenseite 54 des Kettenrings 50 ist die Innenseite 56. Die Innenseite 56 zeigt in Richtung des Fahrzeugs.

Im Allgemeinen bewirkt die auf den Kurbelarm 48 (beispielsweise in einer abwärtigen Richtung) ausgeübte Kraft eine Rotation des Kettenrings in einer Richtung (im Uhrzeigersinn). Die Rotation des Kettenrings 50 erzeugt einen Zug auf die Kette 10, die derart über den Kettenring bewegt wird.

Der Kettenring 50 hat eine Vielzahl von Zähnen 52, die um den Umfang 51 des Kettenrings herum ausgebildet sind. Die Gesamtanzahl der Vielzahl der Zähne ist eine gerade Zahl. Die Vielzahl der Zähne 52 umfasst eine erste Zahngruppe 58 und eine zweite Zahngruppe 60, die in alternierender Weise angeordnet sind. Die Anzahl der ersten Zahngruppen und der zweiten Zahngruppen ist gleich. Bei diesem Kettenring aber auch bei der Erfindung ist die erste Zahngruppe 58, die zur Aufnahme durch und zum Einpassen in die äußeren Verbindungsräume 40 ausgebildet ist, und eine zweite Zahngruppe 60 vorgesehen, die zur Aufnahme durch und zum Einpassen in die inneren Verbindungsräume 42 ausgebildet ist.

Die Form des Kettenringumfangs 51 kann im Wesentlichen kreisförmig oder nicht kreisförmig sein, das heißt beispielsweise elliptisch, oval, polygon oder parabolisch. Alle Beispiele eines Kettenrings sind hier mit einem kreisförmigen Umfang 51 gezeigt.

Jeder Zahn der ersten Zahngruppe ist zum Eingriff mit der Kette 10 über die äußeren Verbindungsräume 40 ausgebildet. Jeder Zahn der zweiten Zahngruppe 60 ist zum Eingriff mit der Kette 10 über die inneren Verbindungsräume 42 ausgebildet.

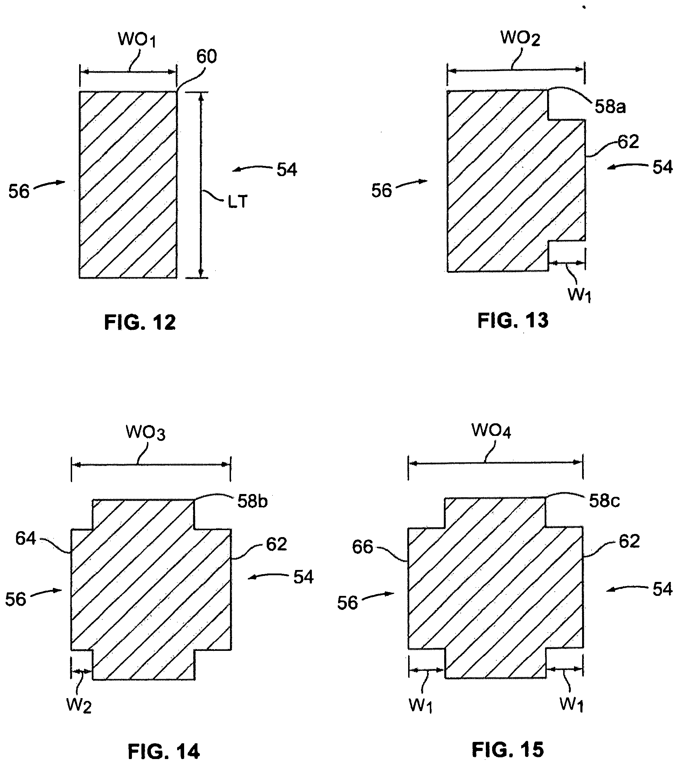

Wendet man sich nun Fig. 12 zu, so hat jeder Zahn der zweiten Zahngruppe 60 eine Form, deren Querschnittsansicht im Wesentlichen rechteckförmig ist, insbesondere an oder nahe der Basis oder der Wurzel der Zähne. Die Querschnittsansicht ergibt sich durch einen Schnitt entlang einer Ebene, die parallel zu der Oberseite 80 der Zähne verläuft und sich durch eine Basiskreisposition der Zähne erstreckt, das heißt um die Hälfte des Weges zwischen dem Wurzelkreis und dem Außenseitenkreis.

Der rechteckförmige Querschnitt und die Gesamtbreite WO₁ jedes Zahns der zweiten Zahngruppe 60 sollte eng auf die Ausbildung jedes der inneren Verbindungsräume 42 (Fig. 1) abgestimmt sein. Der gezeigte Querschnitt jeded Zahns der zweiten Zahngruppe zeigt die Außenseite 54 als im Wesentlichen planar und die Innenseite 56 ebenfalls als im Wesentlichen planar. Jeder Zahn der zweiten Zahngruppe 60 kann über ca. 75 % des axialen Abstands D₁ eines korrespondierenden Raumes in der Kette 10 ausfüllen. Vorzugsweise füllt jeder Zahn der zweiten Zahngruppe 60 über ca. 80 % von D₁ des entsprechenden Raumes in der Kette 10 aus. Bevorzugt füllt jeder Zahn der zweiten Zahngruppe 60 über ca. 85 % von D₁ des korrespondierenden Raumes in der Kette 10 aus.

Wendet man sich den Fig. 13-15 zu, hat jede der alternativen Varianten der Zähne 58a, 58b, 58c der ersten Zahngruppe 58 (siehe Fig. 3) eine Form, die in einer Querschnittsansicht durch den Zahn, wie in Fig. 12 gezeigt ist, dieselbe Länge L_{T} in Längsrichtung aufweist als die zweite Gruppe 60 (Fig. 12). Jeder Zahn der ersten Zahngruppe 58 kann über ca. 75 % der Distanz D₂ eines entsprechenden Raumes in der Kette 10 ausfüllen. Bevorzugt füllt jeder Zahn der ersten Zahngruppe 58 über ca. 80 % von D₂ des entsprechenden Raumes in der Kette 10 aus. Am meisten bevorzugt führt jeder Zahn der ersten Zahngruppe 58 über ca. 85 % von D₂ des entsprechenden Raumes in der Kette 10 aus.

Jeder Zahn der ersten Zahngruppe 58 hat ein zusätzliches Merkmal an der Außenseite oder einen ersten Vorsprung 62 an der Außenseite 54 an jedem alternativen Zahn 58a, 58b und 58c. Wie in Fig. 13 ebenfalls gezeigt, kann die Innenseite 56 des Zahns 58a dieselbe (das heißt ohne Vorsprung) sein wie die Innenseite 56 jeder der zweiten Zahngruppen 60. Der erste Vorsprung 62 ist derart ausgebildet, dass er in einen entsprechenden Teil der äußeren Verbindungsräume 40 der Kette 10 (Fig. 1) passt und eine Breite W₁ aufweist. Der Vorsprung 62 trägt zum Halten der Kette 10 an dem Kettenring 50 (Fig. 3) bei. Der Vorsprung 62 sorgt dafür, dass die Gesamtbreite WO₂ jedes Zahns 58a um die Erstreckung des Vorsprungs 62 größer als die Gesamtbreite WO₁ ist.

Fig. 14 zeigt eine andere Ausführungsform eines Zahns 58b der ersten Zahngruppe 58. Insbesondere ist der Zahn 58b ähnlich zu den in Fig. 13 gezeigten Zähnen ausgebildet, mit dem zusätzlichen Merkmal eines inneren oder zweiten Vorsprungs 64 an der Innenseite 56 der Zähne. Der Vorsprung 64 hat eine Breite W₂, die kleiner als die Breite W₁ des Vorsprungs 62 des Zahns 58a ist, oder alternativ größer als W₁. Die Vorsprünge 62, 64 sorgen dafür, dass die Gesamtbreite WO₃ jedes Zahns 58b um die Erstreckung der Vorsprünge 62, 64 größer als die Gesamtbreite WO₁ jedes Zahns 60 ist. Ferner ist WO₃ größer als WO₂.

Fig. 15 zeigt eine weitere Ausführungsform eines Zahns 58c der ersten Zahngruppe 58. Insbesondere ist der Zahn 58c ähnlich zu dem in Fig. 14 gezeigten Zahn ausgebildet, mit einem inneren oder zweiten Vorsprung 66 an der Innenseite 56 des Zahns. Der Vorsprung 66 hat eine Breite W₁, die gleich der Breite W₁ des Vorsprungs 62 des Zahns 58a ist. Die Vorsprünge 62, 66 sorgen dafür, dass eine Gesamtbreite WO₄ jedes Zahns 58c um die Erstreckung der Vorsprünge 62, 66 größer als die Gesamtbreite WO₁ jedes Zahns 60 ist. Darüber hinaus ist WO₄ größer als WO₃.

Es ist ersichtlich, dass verschiedene Ausbildungen der Zähne 58 Vorsprünge umfassen, die entlang der Seite oder der Seiten von jedem Zahn in einer Position vorgesehen sind, an der sie effektiv zum Positionieren der Kette auf dem Zahnring 50 beitragen, wobei Positionen umfasst sind, die nahe oder an der Basis jedes Zahns oder höher an jedem Zahn 58 liegen.

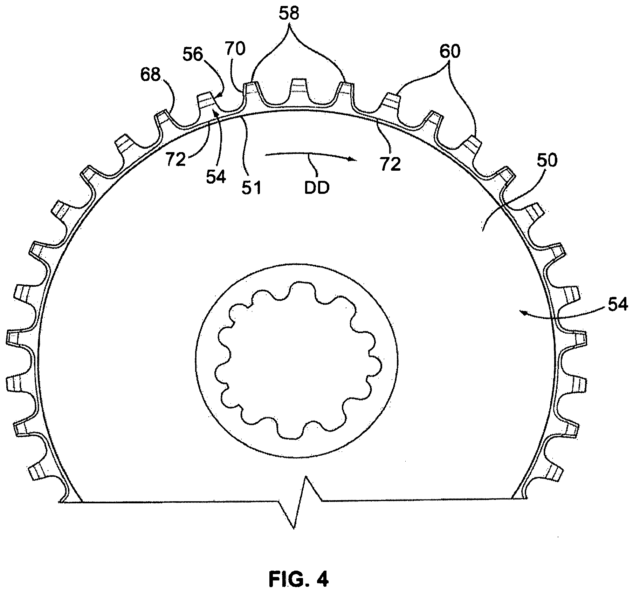

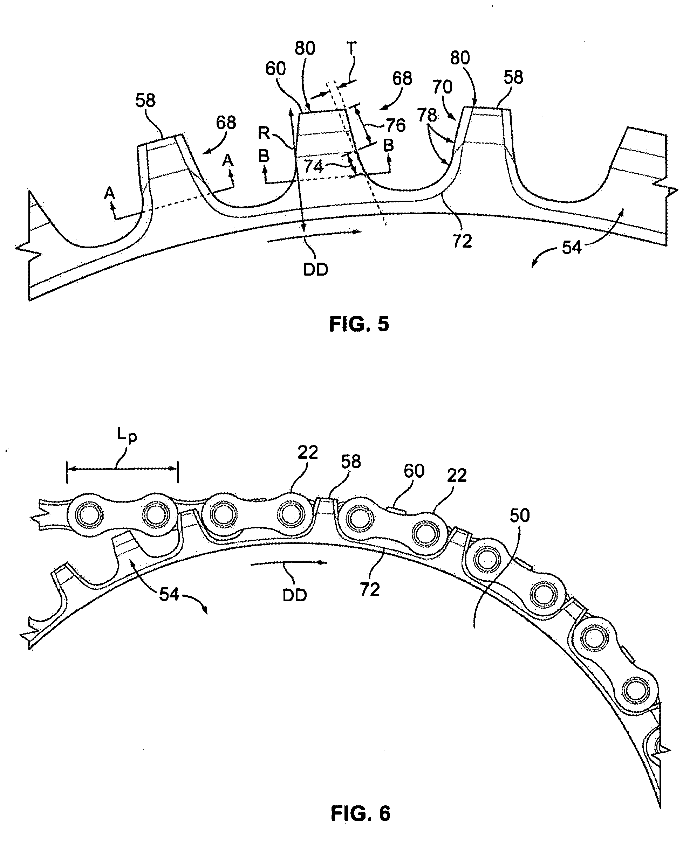

Die Fig. 4 und 6 zeigen eine Außenseite 54 des Kettenrings 50 und die Antriebsrichtung DD. Die erste Zahngruppe 58 ist alternierend mit der zweiten Zahngruppe 60 angeordnet.

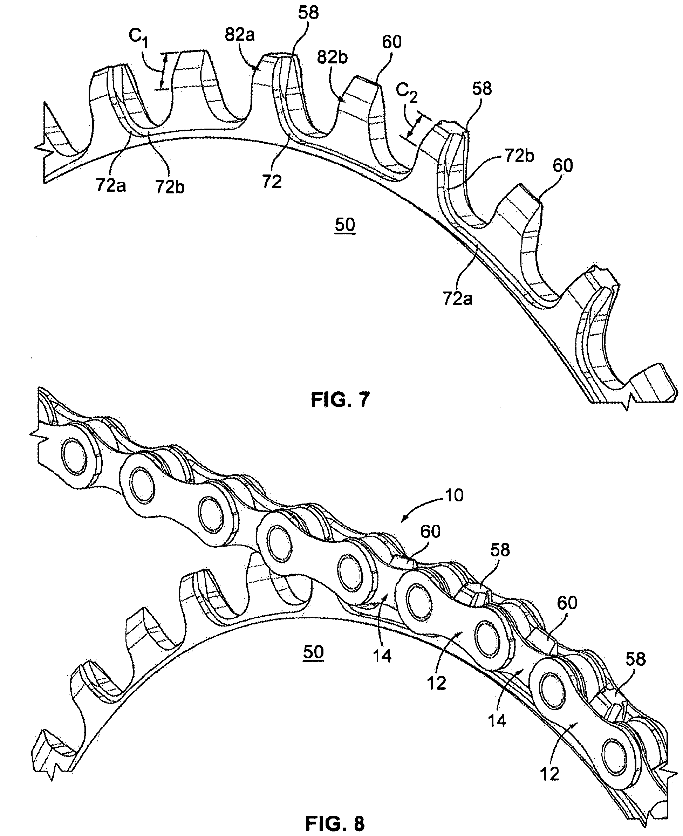

Die Konfiguration der zweiten Zahngruppe 60 kann mit Bezug auf die Außenseiten und Innenseiten 54, 56 jedes Zahns 60 durch Formen einer inneren Verbindungsaufnahmeausnehmung 72 in dem Kettenring 50 definiert sein, die ein an den Seiten der Zähne 60 abgenommenes Material widerspiegelt. Die innere Verbindungsaufnahmeausnehmung 72 dient ebenfalls zum Festlegen der Querschnittsform jeder Zahngruppe 58. Die innere Verbindungsaufnahmeausnehmung 72 legt die Außenseiten und Innenseiten 54, 56 jedes Zahns fest und erstreckt sich von der vorderen Flanke 68 jeder der Zahngruppen 58 zu einer hinteren Flanke 70 einer benachbarten Zahngruppe 58 in Antriebsrichtung DD. Jede innere Verbindungsaufnahmeausnehmung 72 ist zum Aufnehmen der Länge Lp einer inneren Verbindungsplatte 22 der Kette (Fig. 6) ausgebildet. Jede Ausnehmung 72 hat eine Basisfläche 72a, die sich in einer axialen Richtung erstreckt, und eine Wand 72b (Fig. 7), die sich radial erstreckt. Die Basisfläche 72a kann eine leicht gekrümmte Kontur aufweisen und kann im Wesentlichen in Form eines "U" ausgebildet sein.

Fig. 5 zeigt das Profil jedes Zahns der Zähne 58, 60 im Detail. Die innere Verbindungsaufnahmeausnehmung 72 ist in dem Kettenring 50 ausgebildet und erstreckt sich entlang der Seiten jeder der zweiten Zahngruppen 60 und von der Belastungsseite einer vorderen oder führenden Flanke 68 einer der Zahngruppen 58 zu einer hinteren Flanke 70 einer benachbarten Zahngruppe 58 in Antriebsrichtung DD. Die Ausnehmung 72 ist dazu ausgebildet, die Länge Lp (Fig. 6) einer inneren Verbindungsplatte 22 aufzunehmen. Jeder Zahn kann eine Oberseite 80 aufweisen. Die Basisfläche 72a kann sich zu der Oberseite 80 jedes der Zähne 58 erstrecken. Die vordere Flanke 68 jedes Zahns umfasst eine Kontaktzone 74, an der eine Rolle 24 (Fig. 1) den Zahn berührt.

Oberhalb der Kontaktzone 74 ist ein optionaler Spitzenabschnitt 76 vorgesehen. Die Rolle 24 kontaktiert den Spitzenabschnitt 76 unter normalen Antriebsbedingungen nicht. Der Spitzenabschnitt 76 kann vorwärtig von einer entlang der Kontaktzone 74 gezogenen Linie um eine Distanz T vorstehen. Der vorstehende Spitzenabschnitt 76 bewirkt einen früheren Eingriff eines Kettenverbindungselements als bei einer Kette ohne Spitzenabschnitt und stellt eine bessere Führung der Kette bereit.

Ein optionales Hakenmerkmal 78 ist ein Merkmal, das an der hinteren Flanke 70 jedes Zahns 58, 60 ausgebildet sein kann. Das Hakenmerkmal 78 ist entlang der hinteren Flanke 70 positioniert und kann mit dem Spitzenabschnitt 76 zur besseren Führung der Kette zusammenwirken. Das Hakenmerkmal 78 kann einen Abschnitt der hinteren Flanke 70 umfassen, der mit der radialen Richtung R übereinstimmt.

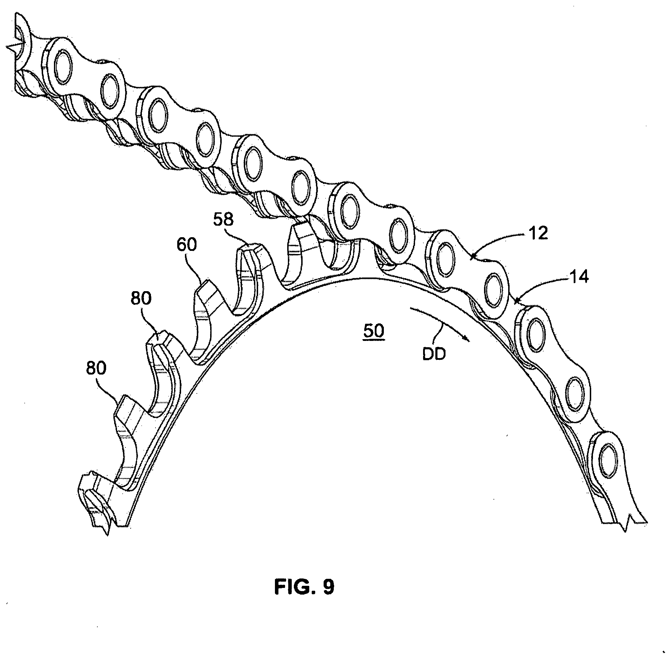

Wendet man sich nun Fig. 7 zu, sind die Zähne der ersten Zahngruppe 58 und die Zähne der zweiten Zahngruppe 60 des Kettenrings 50 in alternierender Weise angeordnet. Ein optionales Merkmal der Zähne jeder der ersten Zahngruppe 58 und der zweiten Zahngruppe 60 ist eine entsprechende äußere Fase 82a, 82b. Jeder Zahn der ersten Zahngruppe 58 hat eine äußere Fase 82a, die eine gebogene Fläche an der Außenseite 54 oder eine Schulter jedes Zahns sein kann. Jeder Zahn der zweiten Zahngruppe 60 hat eine äußere Fase 82b, die eine gebogene Fläche an der Außenseite 54 oder Schulter jedes Zahns sein kann. Die äußere Fase 82b jedes Zahns 60 kann eine Erstreckung C₁ haben, die relativ zu der Erstreckung C₂ der äußeren Fase 82a jedes Zahns 58 größer ist. In den Fig. 8 und 9 umfasst der Kettenring 50 eine daran positionierte und im Eingriff stehende Kette 10. Äußere Kettenverbindungselemente 12 sind an der ersten Zahnkuppe 58 positioniert. Innere Kettenverbindungselemente 14 sind an der zweiten Zahngruppe 60 positioniert.

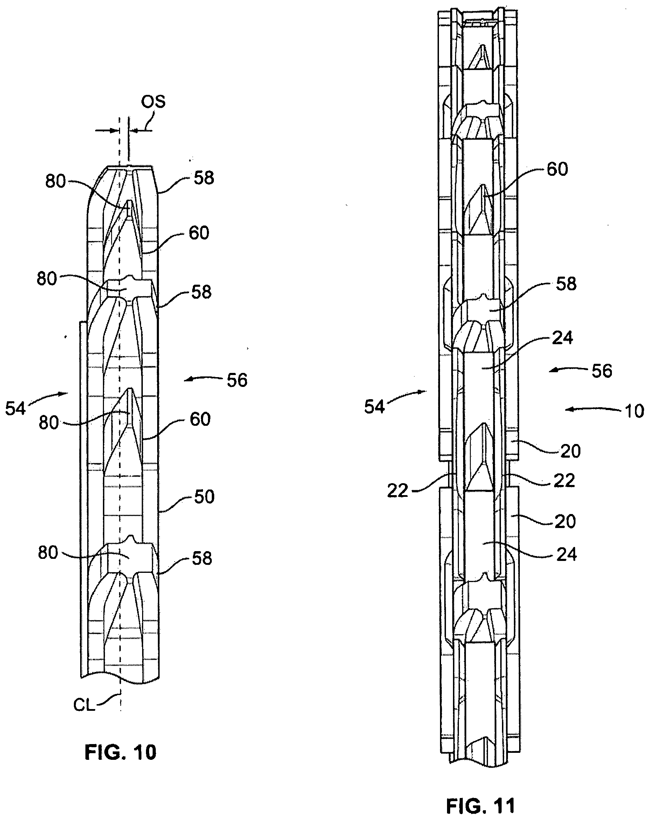

Die Fig. 10 und 11 zeigen entsprechend eine Vorderansicht des Kettenrings 50 ohne Kette 10 und mit Kette. Ein optionales Merkmal aller Zähne 58, 60 des Kettenrings 50 ist ein Versatz OS des Mittelpunks der Zahnspitze oder Oberseite 80 von der Mittellinie CL in Richtung der Innenseite 56 des Kettenrings. Dieses Versatzmerkmal stellt eine bessere Führung der Kette an einer Seite des Kettenrings bereit.

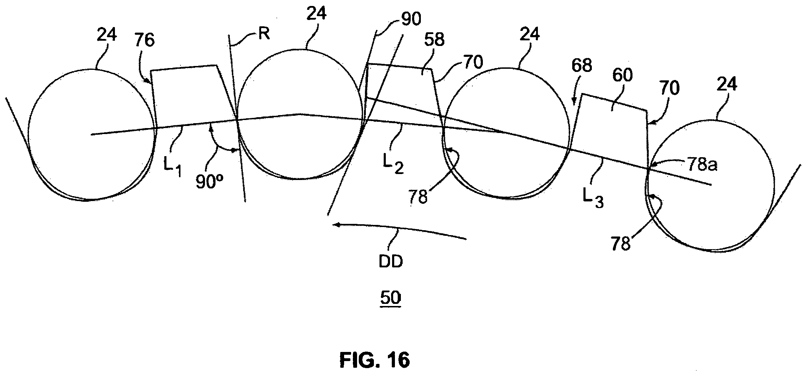

Gemäß Fig. 16 umfasst der Kettenring 50 eine Anzahl von Zähnen 58, 60. Ein Verbindungselement 1 einer mit dem Kettenring 50 in Eingriff stehenden Kette wird durch die Linie L₁ dargestellt, und Verbindungselement 2 und Verbindungselement 3 werden entsprechend durch die Linien L₂, L₃ dargestellt. Jede Linie L₁₋₃ wird zwischen den Mittelpunkten die Achsen jeder Kettenrolle 24 gezogen.

Das Hakenmerkmal 58 ist an der hinteren Flanke 70 jedes Zahns 58, 60 gezeigt. Das Hakenmerkmal 78 ist entlang der hinteren Flanke 70 positioniert und kann mit dem Spitzenabschnitt 76 der vorderen Flanke 68 zum besseren Führen der Kette zusammenwirken. Das Hakenmerkmal 78 kann einen Abschnitt der hinteren Flanke 70 umfassen, die in der radialen Richtung R übereinstimmen. Das Hakenmerkmal 78 hat eine radial äußerste Erstreckung 78a, wo das Hakenmerkmal und die Verbindungsmittellinien L₁₋₃ sich schneiden. Alternativ kann die äußerste Erstreckung 78a höher als die Mittellinien L₁₋₃ sein, so dass mehr Raum für den Eingriff der Rollen in die Zähne in Antriebsrichtung gegeben ist. Die gekrümmte Linie 90 ist der Pfad der Rollen 24, wenn sie den Eingriff des Zahns verlassen.

Im Betrieb ist die Kette 10 mit jedem der äußeren Kettenverbindungselemente 12 auf einem der ersten Zahngruppen 58 und mit jedem der inneren Kettenverbindungselemente 14 auf einer der zweiten Zahngruppen 60 positioniert. Wenn der Kettenring 50 mittels der Kurbel 48 rotiert wird, wird die Kette 10 um den Kettenring gezogen, und die äußeren Kettenverbindungselemente 12 und die inneren Kettenverbindungselemente 14 werden sequentiell mit den entsprechenden ersten und zweiten Zahngruppen 58, 60 in Eingriff gebracht. Wie voranstehend detailliert beschrieben wurde, dienen verschiedene Merkmale des Kettenrings 50 zum Führen und zum Halten der Kette auf dem Kettenring.

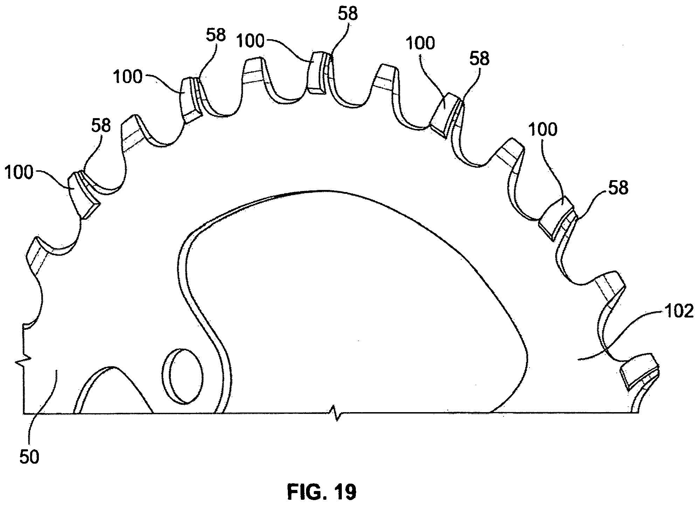

Wendet man sich nun den speziellen Ausführungsformen der Erfindung zu, für die die vorstehenden allgemeinen Erläuterungen gleichsam weitgehend gelten, und wendet man sich dabei insbesondere der ersten Ausführungsform zu, wie sie den Figuren 17-19 gezeigt ist, so erkennt man, dass Vorsprünge 100 an den Zähnen 58 der ersten Zahngruppe an der Außenseite 102 vorgesehen sind. Diese Vorsprünge 100 werden dadurch erreicht, dass auf der Innenseite 104 des Kettenrings 50 längliche Einprägungen 106 vorgenommen werden. Beim Anbringen dieser Einprägungen 106 wird das Material der Zähne 58 der ersten Zahngruppe in einen Fließzustand versetzt und es werden durch eine geeignete Form die Vorsprünge 100 ausgebildet. Diese erstrecken sich, wie man in Figur 19 erkennt, im Wesentlichen über die gesamte radiale Länge der einzelnen Zähne 58. Die Größe der Vorsprünge 100 wird durch die Größe der Einprägungen 106 und natürlich durch die Formgebung auf der Außenseite der Zähne 58 bestimmt.

Der Vorsprung 100 an den Zähnen 58 der ersten Zahngruppe führt eine aufgelegte Kette gegen einen Kettenabwurf nach innen und verbessert so die Kettenführungseigenschaften.

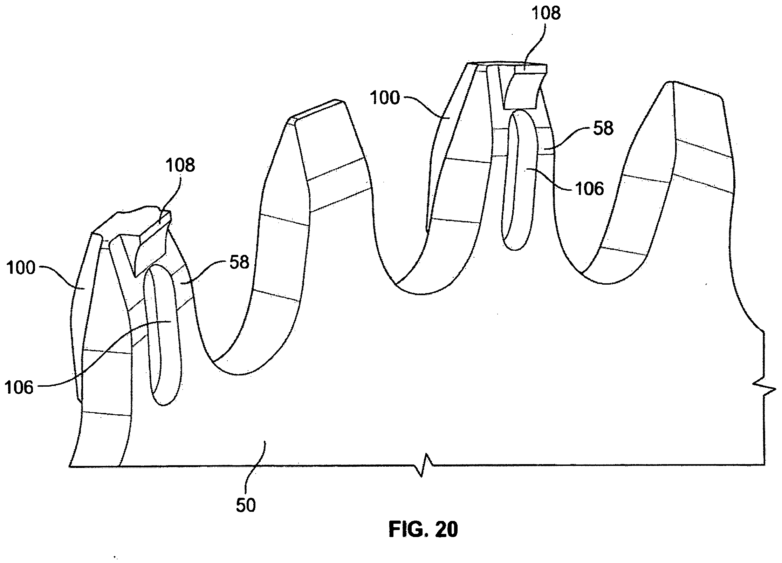

Figur 20 zeigt eine weitere Ausführungsform der Erfindung, bei der der Kettenring 50 im Wesentlichen dem Kettenring 50 aus der Ausführungsform gemäß den Figuren 17-19 entspricht. Zusätzlich ist aber oberhalb der Einprägung 106 auf der Innenseite der Zähne 58 ein weiterer Vorsprung 108 vorgesehen. Auch dieser wird durch Materialumformung hergestellt. Auch für diesen weiteren Vorsprung 108 auf der Innenseite der Zähne 58 der ersten Zahngruppe kann Material verwendet werden, das durch die Einprägung 106 fließverformt wird.

Dieser weitere Vorsprung 108 ist wie ein verstärkter Grat ausgebildet und verhindert das Falschauflegen der Kette, weil die Innenlaschen der Kette auf die so im Bereich des Zahnkopfes verbreiterten Zähne der ersten Zahngruppe nicht mehr passen.

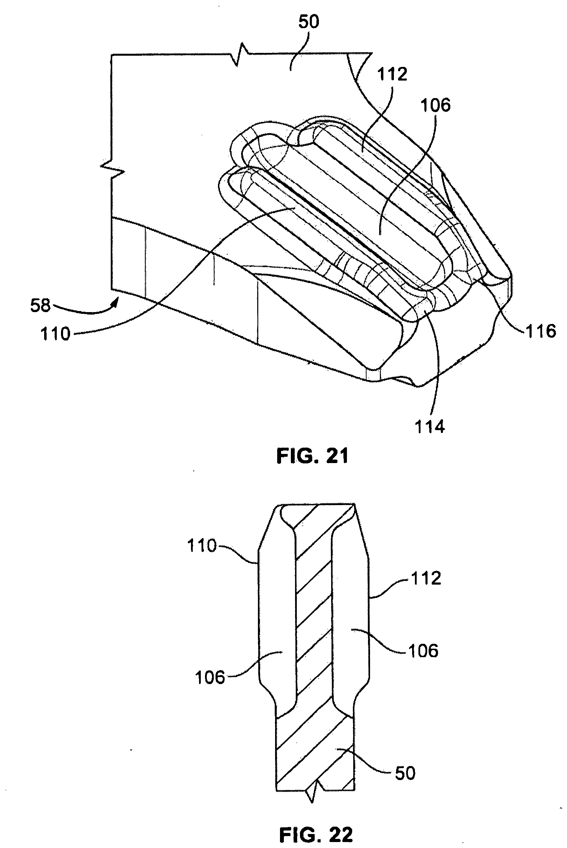

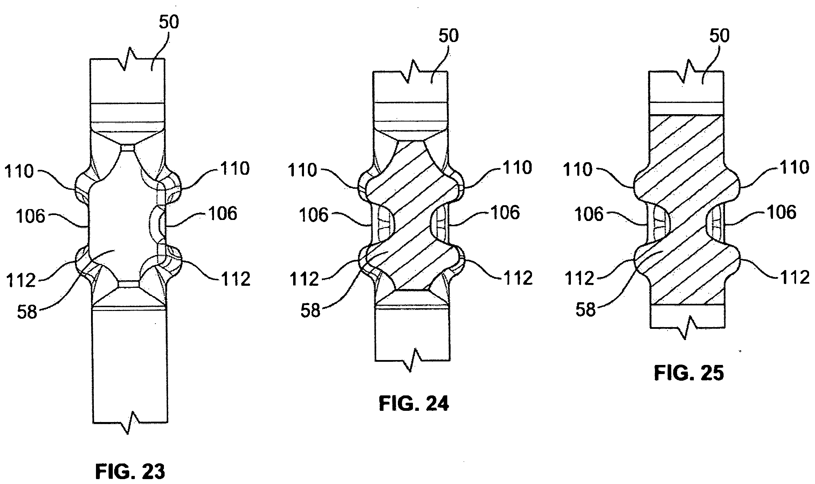

Figuren 21 bis 25 zeigen eine weitere Ausführungsform der Erfindung, wobei sich die Erläuterung auf die Darstellung verschiedener Ansichten und Schnittansichten eines Zahns 58 der ersten Zahngruppe konzentriert. Es gilt, dass dieser speziell gestaltete Zahn 58 beispielhaft Zähne der ersten Zahngruppe repräsentiert, die an einem Kettenring 50 der vorstehend beschriebenen Art vorgesehen sind. Auch diese Zähne 58 weisen Einprägungen 106 auf. Allerdings ist festzustellen, dass diese Zähne 58 beidseits, d.h. auf der Innenseite und auf der Außenseite, entsprechende Einprägungen 106 aufweisen. Dies erkennt man in der Draufsicht gemäß Figur 23 und den Schnittansichten gemäß Figuren 22, 24 und 25. Die Einprägungen 106 sind länglich ausgebildet. Durch eine solche Einprägung 106 wird während des Umformprozesses Material verdrängt. Dieses fließt und verformt sich zu Vorsprüngen 110, 112. Die Vorsprünge 110, 112 erstrecken sich jeweils länglich entlang der Einprägung 106 und umgeben diese mit gekrümmten Abschnitten 114, 116 in einem Kopfbereich des Zahns 58.

Die Figuren 23 bis 25 zeigen, dass die Einprägungen 106 teilweise von den Vorsprüngen 110, 112 umgeben sind. Sie zeigen auch, wie tief die Einprägungen 106 in den Zahn 58 eindringen und zu welchem Maß die Vorsprünge 110, 112 vorstehen.

Im Bereich der größten Höhe der Vorsprünge kann der Zahn unabhängig von den vorstehend im Einzelnen geschilderten speziellen Ausgestaltungen grundsätzlich um mehr als 20 % bis zu 50 % seiner eigentlichen Dicke ohne Deformation annehmen. Im Bereich der tiefsten Stelle der Einprägungen 106 kann der Zahn auf bis zu 30 % seiner ursprünglichen Dicke reduziert sein.

Ferner erkennt man in der Figur 23, dass die Anordnung auf beiden Seiten des Zahns 58, das heißt auf Innenseite und Außenseite, nicht symmetrisch ausgestaltet sein muss, sondern dass die Einprägungen 106 unterschiedliche Längen oder Anordnungen aufweisen können.

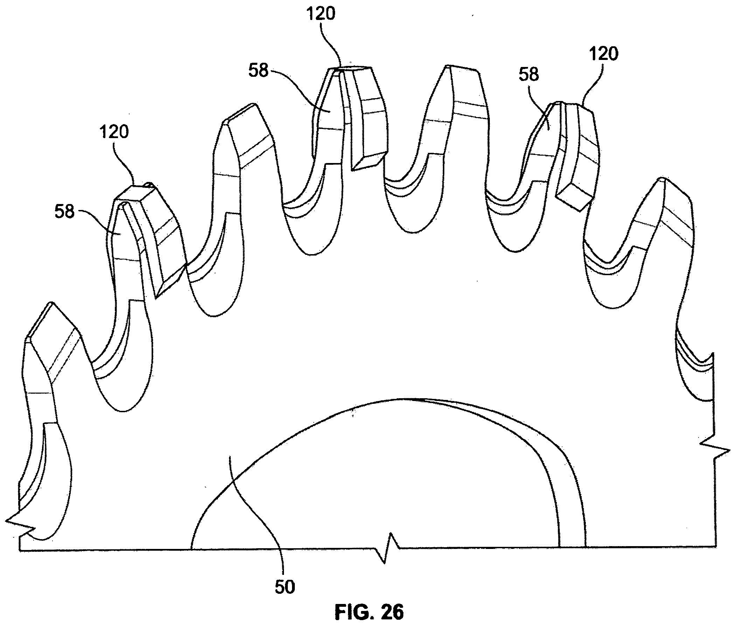

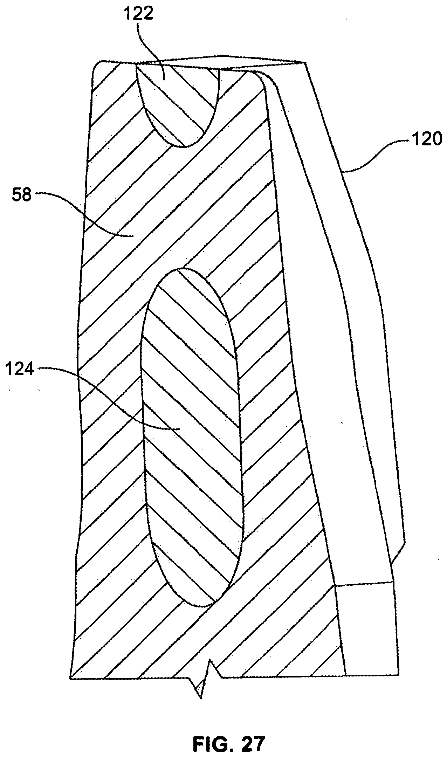

Figuren 26 und 27 zeigen eine beispielshafte Ausführungsform des Kettenrings 50, die nicht Teil der Erfindung ist. Anders als bei den vorstehend geschilderten Ausführungsformen sind die Zähne 58 der ersten Zahngruppe des Kettenrings 50 an der Außenseite und an ihrer Innenseite mit einem Überzug 120 aus aufgetragenem glasfaserverstärktem Kunststoffmaterial versehen. Dadurch werden beidseits der Zähne 58 auf ihrer Außenseite und Innenseite die gewünschten Vorsprünge erzielt. Wie man in der Schnittansicht gemäß Figur 27 erkennt, weisen die Zähne 58 der ersten Zahngruppe in ihrem radial äußeren Bereich eine Ausnehmung 122 und in ihrem mittleren Bereich eine Ausnehmung 124 auf. Diese Ausnehmungen ermöglichen es, dass das Kunststoffmaterial des Überzugs 120 nicht nur die Außen- und Innenseite der Zähne 58 umgibt, sondern sich auch durch die Zähne 58 durch die Ausnehmungen 122 und 124 hindurch erstreckt. Dadurch kann gewährleistet werden, dass das glasfaserverstärkte Kunststoffmaterial des Überzugs 120 sicher, dauerhaft und zuverlässig an den Zähnen 58 verbleibt.

Das Auftragen von zusätzlichem Material, wie im Beispielsfall glasfaserverstärktes Kunststoffmaterial des Überzugs 120, erlaubt es, Vorsprünge beliebiger Form unter geringem fertigungstechnischem Aufwand und unter geringen Kosten herzustellen. Dadurch lassen sich vorteilhaft die Kettenführungseigenschaften des Kettenrings 50 beeinflussen. Alternativ kann auch Metallmaterial durch Auftragsschweißen oder Lotmaterial durch Auftragslöten aufgetragen werden. Als Grundkörper lässt sich ein einfach zu richtender, flacher gehärteter Kettenring aus Stahl einsetzen, der hohe Verschleißfestigkeit aufweist und kostengünstig herstellbar ist.

## Patentansprüche

1. Einzelkettenring (50) für eine Fahrradvorderkurbelanordnung zum Eingreifen in eine Antriebskette (10), aufweisend:
eine an einem Umfang des Kettenrings (50) ausgebildete Vielzahl von Zähnen (52), wobei die Vielzahl von Zähnen (52) eine gerade Anzahl von Zähnen (52) aufweist;
wobei die Vielzahl von Zähnen (52) Zähne einer ersten Zahngruppe (58) und Zähne einer zweiten Zahngruppe (60) umfasst, die alternierend zwischen der ersten Zahngruppe (58) angeordnet ist, wobei die Zähne (52) der ersten Zahngruppe (58) zum Eingriff mit der Antriebskette (10) über äußere Verbindungsräume (40) der Antriebskette (10) ausgebildet sind, wobei die Zähne der zweiten Zahngruppe (60) zum Eingriff mit der Antriebskette (10) über innere Verbindungsräume (42) der Antriebskette (10) ausgebildet sind,
wobei die Anzahl der Zähne der ersten Zahngruppe (58) und die Anzahl der Zähne der zweiten Zahngruppe (60) gleich ist,
wobei jeder Zahn der ersten und zweiten Zahngruppen (58, 60) eine Außenseite (54) und eine Innenseite (56) aufweist, die der Außenseite (54) entgegengesetzt ist,
wobei jeder Zahn der ersten Zahngruppe (58) wenigstens einen ersten Vorsprung (100) an der Außenseite (54) aufweist und jeder Zahn der zweiten Zahngruppe (60) ohne erste Vorsprünge (100) an der Außenseite (54) und der Innenseite (56) ausgebildet ist, **dadurch gekennzeichnet, dass** der erste Vorsprung (100) von einer Materialverformung an der Außenseite (54) der Zähne der ersten Zahngruppe (58) gebildet ist, wobei die Materialverformung von der Innenseite (56) oder von der Außenseite (54) her erzielt wird, wobei der erste Vorsprung (100) in einer Position nahe oder an der Basis jedes Zahns der ersten Zahngruppe (58) vorgesehen ist, an der er effektiv zum Positionieren der Kette auf dem Zahnring beiträgt, wobei sich der erste Vorsprung (100) im Wesentlichen über die gesamte radiale Länge des Zahns erstreckt.

2. Kettenring (50) nach Anspruch 1, ferner aufweisend einen zweiten Vorsprung an der Innenseite (56) jedes Zahns der ersten Zahngruppe (58).

3. Kettenring (50) nach Anspruch 2, wobei der zweite Vorsprung von einer Materialverformung an der Innenseite (56) der Zähne der ersten Zahngruppe (58) gebildet ist, wobei die Materialverformung von der Innenseite (56) oder von der Außenseite (54) erfolgt.

4. Kettenring (50) nach Anspruch 2 oder 3, wobei der erste Vorsprung (100) eine erste Breite und der zweite Vorsprung eine zweite Breite aufweist, und die erste Breite gleich zu der zweiten Breite ist, oder die erste Breite größer als die zweite Breite ist.

5. Kettenring (50) nach einem der Ansprüche 1 bis 4, wobei der erste Vorsprung durch Einprägen hergestellt ist, wobei Material des Zahns von der einen Seite eingeprägt und zum Ausbilden des Vorsprungs auf der Seite des Vorsprungs aus dem Zahn herausgedrückt ist.

6. Kettenring (50) nach einem der Ansprüche 2 bis 5, wobei der zweite Vorsprung durch Einprägen hergestellt ist, wobei Material des Zahns von der einen Seite eingeprägt und zum Ausbilden des Vorsprungs auf der Seite des Vorsprungs aus dem Zahn herausgedrückt ist.

7. Kettenring (50) nach Anspruch 6, wobei der zweite Vorsprung durch Materialumformung oberhalb der Einprägung (106) für den ersten Vorsprung (100) vorgesehen ist.

8. Kettenring (50) nach einem der Ansprüche 1 bis 7, wobei der erste Vorsprung (110) durch Einprägen hergestellt ist, wobei Material des Zahns an der einen Seite des Zahns lokal eingeprägt wird, so dass zum Ausbilden des wenigstens einen Vorsprungs (110) Material auf derselben Seite des Zahns nahe der lokalen Einprägung (106) hervortritt.

9. Kettenring (50) nach einem der Ansprüche 2 bis 8, wobei der zweite Vorsprung (112) durch Einprägen hergestellt ist, wobei Material des Zahns an der einen Seite des Zahns lokal eingeprägt wird, so dass zum Ausbilden des wenigstens einen Vorsprungs (112) Material auf derselben Seite des Zahns nahe der lokalen Einprägung (106) hervortritt.

10. Kettenring (50) nach Anspruch 8 oder 9, wobei zum Ausbilden zweier Vorsprünge (110, 112) auf ein und derselben Seite des Zahns Material beidseits der lokalen Einprägung (106) hervortritt.

11. Kettenring (50) nach Anspruch 10, wobei sich das hervortretende wenigstens einen Vorsprung (110, 112) bildende Material zumindest abschnittsweise um die lokale Einprägung (106) herum erstreckt.

12. Kettenring (50) nach einem der voranstehenden Ansprüche, wobei jeder Zahn der ersten Zahngruppe (58) und der zweiten Zahngruppe (60) eine vordere Flanke umfasst, und wobei die vordere Flanke einen vorstehenden Spitzenabschnitt aufweist, der zum Führen der Kette ausgebildet ist.

13. Kettenring (50) nach einem der voranstehenden Ansprüche, wobei jeder Zahn der ersten Zahngruppe (58) eine radial äußere Fase aufweist, die eine erste Erstreckung entlang der Außenseite (54) jedes Zahns aufweist.

14. Fahrradkurbelanordnung, aufweisend:
einen Fahrradkurbelarm; und
einen Einzelkettenring (50) nach einem der voranstehenden Ansprüche.

## Claims

1. A single chainring (50) for a bicycle front crank assembly for engagement with a drive chain (10), comprising:
a plurality of teeth (52) which are formed on a circumference of the chainring (50), wherein the plurality of teeth (52) comprises an even number of teeth (52);
wherein the plurality of teeth (52) comprises teeth of a first tooth group (58) and teeth of a second tooth group (60) which is alternately arranged between the first tooth group (58), wherein the teeth of the first tooth group (58) are configured for engaging the drive chain (10) via outer connecting spaces (14) of the drive chain (10), wherein the teeth of the second tooth group (60) are configured for engaging with the drive chain (10) via inner connecting spaces (42) of the drive chain (10), wherein the number of teeth of the first tooth group (58) and the number of teeth of the second tooth group (60) are equal,
wherein each tooth of the first and second tooth group (58, 60) has an outer surface (54) and an inner surface (56) which is opposite the outer surface (54),
wherein each tooth of the first tooth group (58) comprises at least one first protrusion on the outer surface (54) and each tooth of the second tooth group (60) is formed without first protrusions on the outer surface (54) and on the inner surface (56),
**characterised in that** the first protrusion (100) is formed by a material deformation on the outer surface (54) of the teeth of the first tooth group (58), wherein the material deformation is obtained from the inner surface (56) or from the outer surface (54), wherein the first protrusion (100) is provided at a position close or at the basis of each tooth of the first tooth (58), at which it effectively contributes to positioning the chain at the chainring, wherein the protrusion (100) substantially extends over the entire length of the tooth.

2. The chainring (50) according to Claim 1, further comprising a second protrusion on the inner surface (56) of each tooth of the first tooth group (58).

3. The chainring (50) according to Claim 2, wherein the second protrusion is formed by a material deformation on the inner surface (56) of the teeth of the first tooth group (58), wherein the material deformation is obtained from the inner surface (56) or from the outer surface (54),

4. The chainring (50) according to one of Claims 2 or 3, wherein the first protrusion (100) has a first width and the second protrusion has a second width, and the first width is equal to the second width, or the first width is greater than the second width.

5. The chainring (50) according to Claims 1 to 4, wherein the first protrusion is made by impressing, wherein material of the tooth is impressed from the one side and protrudes from the tooth on the side of the protrusion for forming the protrusion.

6. The chainring (50) according to Claim 2 to 5, wherein the second protrusion is made by impressing, wherein material of the tooth is impressed from the one side and protrudes from the tooth on the side of the protrusion for forming the protrusion.

7. The chainring (50) according to Claim 6, wherein the second protrusion is provided by a material deformation above the impression (106) for the first protrusion (100).

8. The chainring (50) according to one of Claims 1 to 7, wherein the first protrusion (110) is made by impressing, wherein material of the tooth is locally impressed on the one side of the tooth so that material protrudes on the same side of the tooth near the local impression (106) for forming at least one protrusion (110).

9. The chainring (50) according to one of Claims 2 to 8, wherein the second protrusion (112) is made by impressing, wherein material of the tooth is locally impressed on the one side of the tooth so that material protrudes on the same side of the tooth near the local impression (106) for forming at least one protrusion (112).

10. The chainring (50) according to one of Claims 8 or 9, wherein material protrudes on both sides of the local impression (106) for forming two protrusions (110, 112) on one and the same side of the tooth.

11. The chainring (50) according to Claim 10, wherein the protruding material which forms at least one protrusion (110. 112) extends at least partially about the local impression (106).

12. The chainring (50) according to one of the previous claims, wherein each tooth of the first tooth group (58) and of the second tooth group (60) includes a front flank, and wherein the front flank comprises a protruding tip section which is formed for guiding the chain.

13. The chainring (50) according to one of the previous claims, wherein each tooth of the first tooth group (58) comprises a radially outer chamfer with a first extension along the outer surface (54) of each tooth.

14. A bicycle crank assembly, comprising:
a bicycle crank arm; and
a single chainring according to one of the previous claims.

## Revendications

1. Mono-plateau (50) pour un système de manivelle avant de bicyclette destiné à venir s'engrener dans une chaîne d'entraînement (10), comprenant :
une pluralité de dents (52) formées sur une circonférence dudit plateau (50), la pluralité de dents (52) présentant un nombre pair de dents (52);
la pluralité de dents (52) comportant des dents d'un premier groupe de dents (58) et des dents d'un deuxième groupe de dents (60) lesquelles sont disposées en alternance entre le premier groupe de dents (58), les dents (52) du premier groupe de dents (58) étant conçues pour venir en prise avec la chaîne d'entraînement (10) par le biais d'espaces de liaison externes (40) de la chaîne d'entraînement (10), les dents du deuxième groupe de dents (60) étant conçues pour venir en prise avec la chaîne d'entraînement (10) par le biais d'espaces de liaison internes (42) de la chaîne d'entraînement (10),
le nombre des dents du premier groupe de dents (58) et le nombre des dents du deuxième groupe de dents (60) étant identiques,
chacune des dents du premier et du deuxième groupe de dents (58, 60) présentant une face extérieure (54) et une face intérieure (56) qui est opposée à la face extérieure (54), chaque dent du premier groupe de dents (58) présentant au moins une première saillie (100) sur la face extérieure (54) et chaque dent du deuxième groupe de dents (60) étant réalisée sans premières saillies (100) sur la face extérieure (54) et sur la face intérieure (56),
**caractérisé en ce que** la première saillie (100) est formée par déformation de matériau sur la face extérieure (54) des dents du premier groupe de dents (58), la déformation de matériau étant réalisée depuis la face intérieure (56) ou depuis la face extérieure (54), la première saillie (100) étant prévue dans une position proche ou à la base de chaque dent du premier groupe de dents (58) dans laquelle elle contribue de manière efficace au positionnement de la chaîne sur le plateau denté, la première saillie (100) s'étendant sensiblement sur toute la longueur radiale de la dent.

2. Plateau (50) selon la revendication 1, présentant en outre une deuxième saillie sur la face intérieure (56) de chaque dent du premier groupe de dents (58).

3. Plateau (50) selon la revendication 2, la deuxième saillie étant obtenue par déformation de matériau sur la face intérieure (56) des dents du premier groupe de dents (58), la déformation de matériau étant effectuée depuis la face intérieure (56) ou la face extérieure (54).

4. Plateau (50) selon la revendication 2 ou 3, la première saillie (100) présentant une première largeur, et la deuxième saillie, une deuxième largeur, et la première largeur étant identique à la deuxième largeur, ou la première largeur étant supérieure à la deuxième largeur.

5. Plateau (50) selon l'une des revendications 1 à 4, la première saillie étant réalisée par estampage, le matériau de la dent étant estampé d'un côté et pressé en dehors de la dent pour former la saillie du côté de la saillie.

6. Plateau (50) selon l'une des revendications 2 à 5, la deuxième saillie étant réalisée par estampage, le matériau de la dent étant estampé d'un côté et pressé en dehors de la dent pour former la saillie du côté de la saillie.

7. Plateau (50) selon la revendication 6, la deuxième saillie étant prévue par déformation de matériau au-dessus de l'empreinte (106) destinée à former la première saillie (100).

8. Plateau (50) selon l'une des revendications 1 à 7, la première saillie (110) étant réalisée par estampage, le matériau de la dent étant estampé localement sur un côté de la dent si bien que du matériau est refoulé sur le même côté de la dent, à proximité de l'empreinte locale (106), pour former ladite au moins une saillie (110).

9. Plateau (50) selon l'une des revendications 2 à 8, la deuxième saillie (112) étant réalisée par estampage, le matériau de la dent étant estampé localement sur un côté de la dent si bien que du matériau est refoulé sur le même côté de la dent, à proximité de l'empreinte locale (106), pour former ladite au moins une saillie (112).

10. Plateau (50) la revendication 8 ou 9, du matériau étant refoulé d'un côté et de l'autre de l'empreinte locale (106) pour former deux saillies (110, 112) sur un seul et même côté de la dent.

11. Plateau (50) selon la revendication 10, le matériau refoulé formant au moins une saillie (110, 112) s'étendant au moins partiellement autour de l'empreinte locale (106).

12. Plateau (50) selon l'une des revendications précédentes, chaque dent du premier groupe de dents (58) et du deuxième groupe de dents (60) comportant un flanc avant, et ledit flanc avant comportant une partie pointue en saillie conçue pour guider la chaîne.

13. Plateau (50) selon l'une des revendications précédentes, chaque dent du premier groupe de dents (58) présentant un chanfrein radialement extérieur qui présente une première étendue le long de la face extérieure (54) de chaque dent.

14. Système de manivelle de bicyclette comprenant :
un bras de manivelle de bicyclette; et
un mono-plateau (50) selon l'une des revendications précédentes.
